# EUROPÄISCHE PATENTSCHRIFT

(11) **EP 3 501 626 B1**
(45) Veröffentlichungstag und Bekanntmachung des Hinweises auf die Patenterteilung: **22.01.2025**
(21) Anmeldenummer: 18000977.1
(22) Anmeldetag: 17.12.2018
(51) Int. Cl.: B01D 53/94, F01N 3/10, F01N 3/20, F02M 21/02, F02D 19/06, F01N 13/00, F02B 43/10, F02M 25/12, F01N 3/08, F01N 13/16, F02D 41/00, F02D 41/14

(54) **VERFAHREN ZUR ABGASREINIGUNG VON MIT GEMISCHEN VON WASSERSTOFF UND AMMONIAK BETRIEBENEN KOLBENMOTOREN**
METHOD FOR WASTE GAS SCRUBBING OF PISTON ENGINES POWERED USING MIXTURES WITH HYDROGEN AND AMMONIA
PROCÉDÉ D'ÉPURATION DES GAZ D'ÉCHAPPEMENT DES MOTEURS À PISTONS FONCTIONNANT AVEC DES MÉLANGES D'HYDROGÈNE ET D'AMMONIAC

(30) Priorität: 21.12.2017 DE 102017011833
(43) Veröffentlichungstag der Anmeldung: 26.06.2019
(73) Patentinhaber: Ammonigy GmbH, 70563 Stuttgart (DE)
(72) Erfinder: Wannemacher, Gerhard, 64390 Erzhausen (DE)
(74) Vertreter: Steffan & Kiehne Patentanwälte PartG mbB

(56) Entgegenhaltungen:
- DE-T5- 112011 101 487
- US-A1- 2010 019 506
- US-A1- 2011 283 960
- US-A1- 2014 311 428

## Beschreibung

### Gebiet der Erfindung

Die vorliegende Erfindung betrifft ein Verfahren zur Reinigung der Abgase von 4-Takt-Ottomotoren, die mit Gemischen von Wasserstoff und Ammoniak als Brennstoff betrieben werden.

### Hintergrund der Erfindung

Im Zuge der Energiewende und im Rahmen der Diskussion zur Speicherung von überschüssiger elektrischer Energie aus Solar- und Windkraftanlagen (sog. Powerto-Gas) werden als chemische Energieträger in erster Linie Wasserstoff und Methan benannt, die konventionelles Erdgas ersetzen und in Zeiten schwacher Ökostromversorgung z. B. in Gaskraftwerken wieder verstromt werden oder für mobile Anwendungen zum Einsatz kommen sollen.

Auch Ammoniak kann als chemischer Energiespeicher genutzt werden und bietet den Vorteil der billigen Speicherung in flüssiger Form verbunden mit den damit resultierenden kostengünstigen Transportmöglichkeiten. Die schlechte Brennbarkeit des Ammoniaks, die die Verwendung in Wärmekraftmaschinen erheblich erschwert, kann durch Zumischung von Wasserstoff beseitigt werden. Insbesondere bei mobilen Anwendungen besteht die Möglichkeit, neben der Mitführung des Wasserstoffs in separaten Gasflaschen auch den Wasserstoff durch Spaltung in die Elemente aus Ammoniak selbst herzustellen. Damit entfällt die Mitführung eines weiteren Tanks bzw. einer weiteren Komponente. Der dann bei der Ammoniakspaltung entstehende Stickstoff durchläuft als Inertgas den Prozess.

Derartige Mischungen aus Ammoniak und Wasserstoff können analog zu Methan, Propan, Biogas oder Benzin in den üblichen Ottomotoren als Brennstoff eingesetzt werden. Das Mischungsverhältnis kann dabei weiträumig variiert werden. Zur Vermeidung von unnötigen Kosten wird ein möglichst niedriger Anteil von Wasserstoff angestrebt. Ein zu geringer Anteil führt jedoch zu schlechter Brennbarkeit des Gasgemisches einhergehend mit einem verminderten Wirkungsgrad der Wärmekraftmaschine. Je nach Betriebsbedingungen und Motorkonstruktion ist u. U. auch die Verbrennung von reinem Ammoniak noch möglich. In den heute üblichen Benzinmotoren können ohne besondere Massnahmen Gasmischungen von Ammoniak und Wasserstoff im Molverhältnis von etwa 1 : 1 bis 4 : 1 als Brennstoff eingesetzt werden. Noch höhere Wasserstoffanteile sind zwar nutzbar, verteuern aber den Anlagenbetrieb und ziehen die Nachteile des reinen Wasserstoffbetriebs wie Frühzündung oder Flammenrückschlag in den Ansaugteil nach sich.

Einer der wesentlichen Unterschiede bei der Verbrennung von Ammoniak-Wasserstoff-Mischungen im Vergleich zu den genannten anderen Brennstoffen besteht darin, dass die Verbrennungsprodukte i. A. einen höheren Anteil an Stickoxiden (NOx) enthalten, da hier der Stickstoff bereits im Brennstoff gebunden ist. Insofern ist eine entsprechende Abgasreinigung vorzusehen, die Gegenstand der vorliegenden Erfindung ist.

Der Betrieb von 4-Takt-Verbrennungsmotoren mit Fremdzündung bei Verwendung von Ammoniak-Wasserstoff-Mischungen als Brennstoff ist in der Anmeldung DE102009007021 beschrieben. Im Rahmen der Abgasreinigung wird hier ein Verfahren mit einem Betrieb der Maschine mit genau stöchiometrischem Mischungsverhältnis zwischen Brennstoff und Luft unter Verwendung eines in den Abgasstrom geschalteten Katalysators beschrieben. Als Katalysator dient ein für die Reduktion von Stickoxiden mit vorgelagerter Eindüsung von Harnstofflösung geeigneter Typ, ein sogenannter SCR-Katalysator. Diese Katalysatoren bestehen aus den Oxiden von Titan, Wolfram oder Vanadium oder auch aus Zeolithen als aktive Komponenten.

Die US 2011/283960 beschreibt ein Verfahren, bei dem ein Motor mit Ammoniak/Wasserstoff betrieben wird. Der Wasserstoff wird dabei durch Ammoniakspaltung in einer entsprechenden Ammoniakspaltungsvorrichtung hergestellt, wobei die erforderliche Wärme (endotherme Reaktion) aus dem Abgasstrom des Motors gewonnen wird. Da die Temperatur des Abgases im Allgemeinen für die Ammoniakspaltung nicht ausreicht, wird vor der Spaltungsvorrichtung ein Ammoniak-Oxidationskatalysator geschaltet und vor diesem Katalysator zusätzlich Ammoniak dem Abgas beigemischt. Durch die Oxidation des zusätzlichen Ammoniaks wird die Temperatur des Abgasstroms entsprechend erhöht, damit die Ammoniakspaltung erfolgen kann. Damit der Oxidationskatalysator überhaupt arbeiten kann, muss eine entsprechende Sauerstoffmenge zur Oxidation des zusätzlich beigemischten Ammoniaks vorhanden sein. Der Motor wird also im mageren Bereich betrieben

Die DE112011/101487T5 offenbart ein Verfahren, bei dem ein Motor mit Ammoniak und einem Zusatzbrennstoff, z. B. Wasserstoff, betrieben wird. Die Abgasreinigung wird dabei durch einen Ammoniak- und einen NOₓ-Sensor im Abgasstrom gesteuert. Eine Lambda-Sonde ist in diesem Dokument nicht vorgesehen.

In der US2014/311428A1 geht es auch um die Abgasreinigung von NH₃ und NO über einen SCR-Katalysator, der ein mageres Gemisch für den Betrieb der Kolbenmaschine voraussetzt. Die Maschine wird dabei so betrieben, dass bestimmte Mengenverhältnisse von NH₃ und NO im Abgas eingestellt werden, so dass eine selektive Umsetzung auch bei Anwesenheit von Sauerstoff erfolgen kann. Die Steuerung wird über NH₃- und NO-Sensoren realisiert.

### Zusammenfassung der Erfindung

Die Erfindung ist ein Verfahren nach Anspruch 1.

Bei der Verbrennung von Ammoniak-Wasserstoff-Gemischen entstehen keine kohlenstoffhaltigen Schadstoffe im Abgas wie Ruß, Kohlenmonoxid oder Kohlenwasserstoffe, weil kein Kohlenstoff im Brennstoff enthalten ist. Relevante Abgaskomponenten sind neben NOx noch Ammoniak und Wasserstoff selbst sowie u. U. in geringem Maß gebildetes N2O, welches aber umwelttechnisch von untergeordneter Bedeutung ist. Für die Abgabe von Wasserstoff in die Atmosphäre gibt es keinen Grenzwert, lediglich sicherheitstechnische Belange sind zu beachten. Für Ammoniak gibt es bei mobilen Anwendungen noch keinen Grenzwert, es ist aber in Zukunft mit entsprechenden Festsetzungen zu rechnen. Wesentlicher Schadstoff bleibt damit das NOx, für das je nach Emissionsquelle die gesetzlichen Vorgaben einzuhalten sind.

Beim Betrieb eines Ottomotors mit Ammoniak-Wasserstoff-Mischungen sind im Abgas damit die Komponenten Ammoniak, Wasserstoff, NOx und Sauerstoff neben den Hauptkomponenten Stickstoff und Wasserdampf enthalten. Üblicherweise werden Ottomotoren bei Betrieb mit Kohlenwasserstoffen meist mit stöchiometrischer Mischung zwischen Brennstoff und Luftsauerstoff betrieben (λ=1), wobei λ das Verhältnis zwischen tatsächlich vorhandener Sauerstoffmenge und der für die vollständige Verbrennung des vorhandenen Brennstoffs nötigen Sauerstoffmenge darstellt. Das Verhältnis kann bei der Verbrennung von Kohlenwasserstoffen etwa zwischen λ=0,9 (fetter Betrieb) und 1,5 (extremer Magerbetrieb) schwanken.

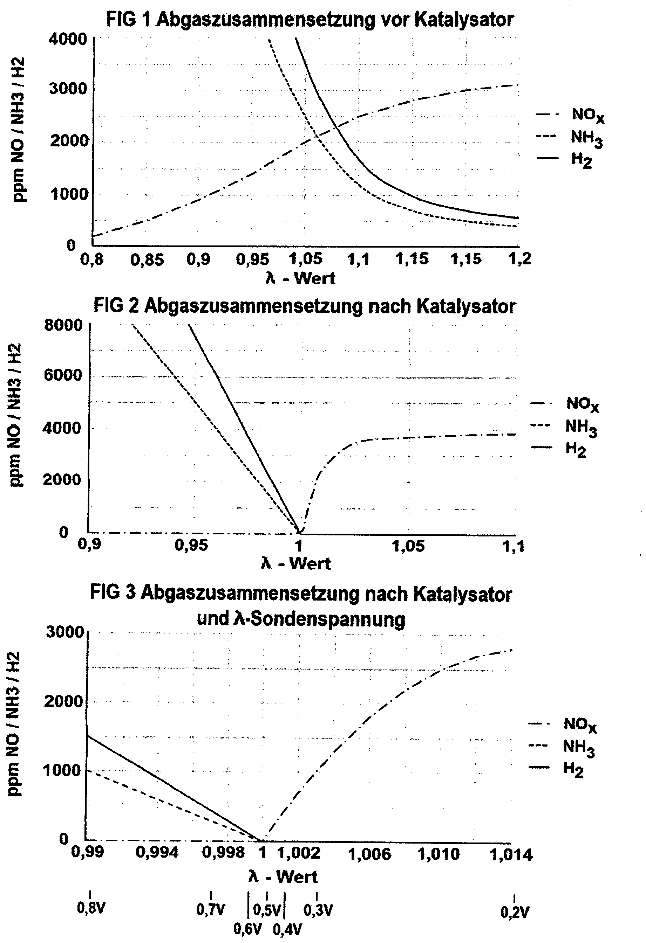

Beim Betrieb mit Ammoniak-Wasserstoff-Mischungen erscheinen die Komponenten Ammoniak, Wasserstoff und NOx (sowie auch Sauerstoff) im Abgas, und zwar auf beiden Seiten des stöchiometrischen Punktes (λ=1). Der systematische Konzentrationsverlauf ist in Fig. 1 als Funktion des A-Wertes dargestellt. Danach sind Stickoxide auch noch beim fettem Betrieb des Motors, Ammoniak und Wasserstoff auch bei Magerbetrieb im Abgas enthalten. Ursache dafür ist die unvollständige Verbrennung des Gasgemisches im Zylinder z. B. durch Erlöschen der Flamme vor der kalten Zylinderwandung, so dass auch im Unterschuß vorliegende Komponenten erhalten bleiben. Die NOx-Konzentrationen können Werte im Bereich von 2000 - 4000 ppm erreichen.

Die Untersuchungen wurden an einem üblichen Einzylinder-4Takt-Motor mit einem Hubraum von 0,4 I und einer Verdichtung von 8:1 vorgenommen. Dem Motor wurde eine λ-Sonde (Sprungsonde) und ein Abgaskatalysator mit nachgeschaltet. Eine übliche Transistorzündanlage wurde verwendet.

Folgende Betriebsbedingungen wurden eingehalten:

| | |
|---|---|
| Drehzahl: | 2000 - 2500 U/min |
| Mechanische Leistung: | 2,5 - 3,5 kW |
| Temperatur vor und nach Katalysator: | 300 - 600 °C |
| Gemischeinstellung: | 0,9 < λ < 1,5 |

Als Brennstoff wurden Ammoniak-Wasserstoff-Mischungen mit einem Volumenanteil von Wasserstoff zwischen 20 und 60% verwendet, was einem Anteil an Ammoniak zwischen 80 und 40 % entspricht. Da der Wasserstoff durch Ammoniakspaltung hergestellt wurde, wurde mit dem Brennstoff eine entsprechende Stickstoffmenge in Höhe von einem Drittel der Wasserstoffmenge als Inertgas mit durch die Maschine geschleppt.

Zur erfindungsgemäßen Reinigung der Abgase wird der Verbrennungskraftmaschine ein handelsüblicher, für Benzinmotoren geeigneter Autoabgaskatalysator nachgeschaltet. Dabei wird ein edelmetallhaltiger Katalysator (dotiert mit Platin, Palladium oder Rhodium) verwendet, der erfindungsgemäß zusätzlich mit einem Sauerstoffspeicher dotiert ist. Im konkreten Fall wurde ein Katalysator mit Sauerstoffspeicherfunktion geeignet z. B. für Benzinmotor VW Golf mit 1,6 I-Maschine verwendet.

Fig. 2 zeigt beispielhaft die Abgaszusammensetzung in Abhängigkeit von der Gemischzusammensetzung (A-Wert) nach dem Abgaskatalysator. Das Beispiel gilt für eine Brennstoffzusammensetzung mit 40 % Wasserstoff und 60% Ammoniak. Im Ergebnis zeigt sich ein starker Anstieg der NOx-Konzentration ab λ =1 mit brennstoffärmeren Gemisch. Im Bereich λ < 1 sinkt die NOx-Konzentration unter die Nachweisgrenze. Die NOx-Konzentrationen bei Magerbetrieb liegen in der Größenordnung der Werte vor dem Katalysator und können diese u. U. noch übersteigen, weil im mageren Betrieb ein Teil des noch vorhandenen Ammoniaks im Katalysator zu NO oxidiert werden kann.

Der prinzipielle Verlauf der NOx-Konzentration ist weitgehend unabhängig von der Brennstoffzusammensetzung. Die Brennstoffzusammensetzung wirkt sich in erster Linie auf das Verhältnis zwischen Ammoniak und Wasserstoff im Abgas bei brennstoffreicher Fahrweise der Maschine aus.

Wasserstoff und Ammoniak steigen ab λ = 1 mit fetterem Gemisch in der Konzentration an, bei λ > 1 sind diese Bestandteile mit mehr nachweisbar, d.h., bei Magerbetrieb werden diese Stoffe im Katalysator praktisch vollständig umgesetzt. Die Ergebnisse verdeutlichen, dass eine optimale Reinigung des Abgases bei λ = 1 erfolgen kann. Bevorzugt ist der Bereich 0,9 < λ ≤ 1, ganz besonders bevorzugt ist der Bereich zwischen 0,98 < λ ≤ 1.

Ein geringfügiges Abweichen führt unmittelbar zu einem Anstieg der Anteile von NOx oder Ammoniak im Abgas. Sofern der λ-Wert um einen Mittelwert von 1 pendelt und erfindungsgemäß ein Katalysator mit einer Sauerstoffspeicherfunktion verwendet wird, kann dennoch eine weitgehende Beseitigung der Schadstoffe erfolgen.

Eine optimale Abgasreinigung wird damit bei einem stöchiometrischen Betrieb mit λ=1 erreicht. Dieses Ergebnis gilt unabhängig davon, welches Mischungsverhältnis zwischen Wasserstoff und Ammoniak für den Brennstoff der Maschine gewählt wird. Dieses Mischungsverhältnis beeinträchtigt lediglich das Verhältnis zwischen Wasserstoff und Ammoniak im Abgas der Maschine sowie im Abgas nach dem Katalysator, sofern im letzten Fall eine brennstoffreiche Betriebsweise vorliegt. Da NOx sowohl mit Wasserstoff als auch mit Ammoniak sehr schnell abreagiert, hat die Brennstoffzusammensetzung praktisch keinen Einfluß auf die Reinigungsrate für die Stickoxide.

Sofern die Abgase nicht nur frei von Stickoxiden sondern auch frei von Ammoniak sein sollen, werden hohe Anforderungen an die Qualität der Lambda-Regelung gestellt. Beim üblichen Motorbetrieb mit Steuerung über die λ-Sonde taktet der λ-Wert zwischen Werten größer 1 und kleiner 1 hin und her, so dass sich ein Mittelwert möglichst nahe an 1 ergibt.

Bei Schwankungen um den Mittelwert λ=1 kann eine weitgehend vollständige Umsetzung der Schadstoffe dann erfolgen, wenn dem Abgaskatalysator erfindungsgemäß eine Komponente mit einer Sauerstoffspeicherfunktion (z. B. Ceroxid) beigemischt ist. Diese Verfahren sind bei der Abgasreinigung von Benzinmotoren Stand der Technik.

Vorzüge der edelmetallhaltigen Abgaskatalysatoren gegenüber den in DE102009007021 genannten SCR-Katalysatoren bestehen darin, dass die NO-Reduktion bereits bei niedrigeren Temperaturen einsetzt und die Reaktionsgeschwindigkeit deutlich höher liegt. Weiterhin wirken sich die üblichen Schwankungen bei stöchiometrischem Betrieb um den Mittelwert λ = 1 wegen der Sauerstoffspeicherfunktion der edelmetallhaltigen Katalysatoren weniger nachteilig auf den Schadstoffgehalt der Abgase nach dem Katalysator aus als bei den SCR-Katalysatoren.

Bei der Verbrennung von Ammoniak-Wasserstoff-Mischungen und der üblichen Regelung auf einen Mittelwert von λ = 1 bestehen deutlich höhere Anforderungen an die Regelungstechnik als beim Betrieb von Benzinmotoren, weil der Stickoxidanteil im ungereinigten Abgas wesentlich über dem bei Benzinmotoren liegt. Infolgedessen steigt auch der Anteil der Stickoxide nach dem Abgaskatalysator beim Übergang von λ = 1 in den mageren Bereich wesentlich steiler an als bei Benzinmotoren. Jede geringe Abweichung des Mischungsverhältnisses zu Werten von λ > 1 hat damit sofort hohe NOx-Emissionen zur Folge, sofern diese nicht mehr durch die Sauerstoffspeicherfunktion ausgeglichen werden.

Um die genannten hohen Anforderungen an die Regelungstechnik zu vermeiden, kann der Betrieb auch bei schwach fetter Gemischzusammensetzung z. B. im Bereich von 0,99 < λ < 1 erfolgen. Dabei wäre ein mittlerer λ-Wert möglichst nahe aber unterhalb von 1 anzustreben. Bei entsprechender Einstellung der Regelung kann damit die Ammoniakkonzentration im Abgas auf unter 100 ppm gedrückt werden, ohne dass die Stickoxide auf unzulässige Werte ansteigen. Eine derartige Regelung ist relativ einfach zu realisieren, da die λ-Sonden in diesem Bereich sehr empfindlich reagieren.

Fig. 3 zeigt die Verhältnisse in unmittelbarer Nähe des stöchiometrischen Punktes λ = 1 unter Angabe der A-Sondenspannung. Eine Regelung der Maschine auf eine mittlere Spannung von beispielsweise ca. 0,5 - 0,7 V an der Sonde ermöglicht die zuverlässige Beseitigung der Stickoxide ohne die Ammoniakkonzentrationen auf unzulässig hohe Werte ansteigen zu lassen.

Eine weitere Möglichkeit zur Verringerung der Ammoniakkonzentrationen bei schwach fetter Betriebsweise besteht in der zusätzlichen Verwendung eines Ammoniak-Spaltkatalysators, der dem edelmetallhaltigen Katalysator vor- oder nachgeschaltet wird. Der Katalysator spaltet Ammoniak in die Elemente und verschiebt damit das Verhältnis zwischen Ammoniak und Wasserstoff zugunsten des Wasserstoffs. Als Katalysator dienen auf einem Trägermaterial aufgebrachtes Eisen, Nickel oder Ruthenium.

Aus thermodynamischer Sicht wäre eine Nachschaltung eines Spaltkatalysators günstiger, unter Berücksichtigung der realen Temperaturverhältnisse im Abgasstrang könnte sich auch eine Vorschaltung als nützlich erweisen. Der Spaltkatalysator könnte auch in den Abgaskatalysator als zusätzliche Komponente eindotiert sein.

Eine weitere Möglichkeit zur Vermeidung von Ammoniakresten bei schwach fettem Betrieb ist die Eindosierung einer geringen Menge Luft nach dem zuvor beschriebenen Abgaskatalysator, so dass dann der A-Wert von knapp unter 1 auf über 1 angehoben wird. In einem nachgeschalteten Oxidationskatalysator können dann Restmengen von Ammoniak oxidiert werden.

Als Oxidationskatalysator können edelmetallhaltige Autoabgaskatalysatoren verwendet werden. Hier besteht allerdings die Gefahr, dass ein Teil des Ammoniaks wieder zu Stickoxiden oxidiert wird. Daher kommen ebenfalls Katalysatoren mit Kupfer, Cer, Kobalt, Nickel, Eisen, Mangan, Vanadium, Molybdän oder Wolfram sowie weiteren Übergangsmetallen bzw. deren Oxide oder metallhaltige Zeolithe als aktive Komponenten in Frage. Mit diesen Katalysatoren erfolgt eine weitgehend selektive Oxidation von Ammoniak zu Stickstoff und Wasser, während die Stickoxidbildung zurückgedrängt wird (sog. SCO-Katalyse). Da die nach dem Stand der Technik verfügbaren Katalysatoren eine Selektivität von über 90% gewährleisten, werden durch die Oxidation keine unzulässigen NOx-Mengen mehr gebildet.

Bei Verwendung eines separaten Oxidationskatalysators mit Lufteinspeisung ergibt sich der Vorteil, dass nur geringe Anforderungen an die Qualität der λ-Sondenregelung zu stellen sind. Es genügt, wenn ein fettes Gemisch vorliegt, auch wenn dann relativ hohe Ammoniakkonzentrationen nach dem ersten Katalysator verbleiben. So ist nach dem angegebenen Beispiel eine Regelung auf etwa 0,8 V ausreichend. Über den Oxidationskatalysator können dann auch höhere Restmengen an Ammoniak beseitigt werden.

Zur vollständigen Beseitigung der Ammoniakreste ist es lediglich erforderlich, durch Luftbeimischung das Abgas auf λ > 1 anzuheben, wobei es nicht auf die Einhaltung eines bestimmten Wertes ankommt. Die Regelung des Luftstroms erweist sich daher als unkompliziert. Eine zu große Luftmenge sollte jedoch vermieden werden, um eine zu starke Auskühlung des Abgasstroms zu vermeiden. Bei Bedarf kann über eine zweite λ-Sonde nach dem Oxidationskatalysator detektiert werden, ob die Luftbeimischung ausreicht. Beispielsweise könnte die Sondenspannung über den Luftstrom auf 0,2 V oder niedriger eingeregelt werden, wodurch eine vollständige Umsetzung der Ammoniakreste sichergestellt ist. Eine andere Möglichkeit würde darin bestehen, einen konstanten Luftstrom einzustellen, der bei Volllast ausreicht, um den am Motor eingestellten λ-Wert noch auf über 1 zu erhöhen. Die gewünschten Bedingungen wären dann auch im Teillastbetrieb erfüllt. Die Regelung für den Oxidationskatalysator könnte dann komplett entfallen.

### Kurze Beschreibung der Zeichnungen

Fig. 1 zeigt den üblichen Verlauf der Abgaszusammensetzung des Ottomotors ohne Verwendung eines Abgaskatalysators in Abhängigkeit von der Gemischzusammensetzung (λ-Wert) bei der Verwendung von Ammoniak-Wasserstoff-Mischungen als Brennstoff.
Fig. 2 zeigt den üblichen Verlauf der Abgaszusammensetzung des Ottomotors mit Verwendung eines üblichen Autoabgaskatalysators in Abhängigkeit von der Gemischzusammensetzung (A-Wert) bei der Verwendung von Ammoniak-Wasserstoff-Mischungen als Brennstoff.
Fig. 3 zeigt den üblichen Verlauf der Abgaszusammensetzung des Ottomotors mit Verwendung eines Abgaskatalysators in Abhängigkeit von der Gemischzusammensetzung (λ-Wert) bei der Verwendung von Ammoniak-Wasserstoff-Mischungen als Brennstoff in der unmittelbaren Nähe des stöchiometrischen Punkts unter Angabe der dann jeweils vorliegenden Spannung an der λ-Sonde.

## Patentansprüche

1. Beansprucht wird ein Verfahren zur katalytischen Reinigung der Abgase eines mit Mischungen von Ammoniak und Wasserstoff als Brennstoff betriebenen Ottomotors, **dadurch gekennzeichnet, dass**
- der Brennstoff des Kolbenmotors aus Zumischungen von Wasserstoff zu Ammoniak besteht, so dass ein Brennstoff mit einem Anteil von Ammoniak zwischen 20 % und 100 % entsteht und eingesetzt wird
- der Brennstoff zusätzlich Stickstoff enthalten kann, wenn der Wasserstoff durch Spaltung von Ammoniak in die Elemente erhalten wird
- zur Reinigung der Abgase von den Schadstoffen Stickoxide und Ammoniak ein Autoabgaskatalysator mit Platin, Palladium, Rhodium oder anderen edelmetallhaltigen Komponenten verwendet wird, wobei der Katalysator auch eine sauerstoffspeichernde Komponente enthält
- bei dem der Betrieb des Verbrennungsmotors im zeitlichen Mittel im schwach fetten Bereich bis stöchometrischen Bereich zwischen 0,9 < λ ≤ 1, bevorzugt zwischen 0,98 < λ ≤ 1 erfolgt.

2. Verfahren nach Anspruch 1, bei dem der Betrieb des Verbrennungsmotors unter stöchiometrischen Bedingungen bei λ = 1 erfolgt, wobei hier wegen dem bei der λ-Regelung üblichen Pendelbetrieb um den stöchiometrischen Punkt für λ der zeitliche Mittelwert angenommen ist.

3. Verfahren nach Anspruch 1, bei dem der Betrieb des Verbrennungsmotors in einem ersten Schritt im zeitlichen Mittel im schwach fetten Bereich zwischen 0,9 < λ < 1, bevorzugt zwischen 0,98 < λ < 1 erfolgt.

4. Verfahren nach einem der Ansprüche 1-3, mit zusätzlichem Ammoniak-Spaltkatalysator, wobei der Katalysator als aktive Komponente Eisen, Nickel oder Ruthenium auf einem Träger enthält.

5. Verfahren nach Anspruch 4, wobei der Ammoniak-Spaltkatalysator dem edelmetallhaltigen Katalysator nachgeschaltet ist.

6. Verfahren nach Anspruch 4, wobei der Ammoniak-Spaltkatalysator dem edelmetallhaltigen Katalysator vorgeschaltet ist.

7. Verfahren nach Anspruch 3, wobei der Ammoniak-Spaltkatalysator mit den aktiven Komponenten Eisen, Nickel oder Ruthenium zur Spaltung in den edelmetallhaltigen Katalysator eingemischt ist, so dass keine räumliche Trennung der beiden Katalysatoren mehr vorliegt.

8. Verfahren nach den Ansprüchen 1 und den Ansprüchen 3-7 mit zusätzlicher Zumischung einer geringen Luftmenge in einem zweiten Schritt nach dem Autoabgaskatalysator zum Übergang des Abgases auf λ > 1 und Nachschaltung eines selektiven Oxidationskatalysators zur Beseitigung von Ammoniakresten, wobei der Oxidationskatalysator Kupfer, Cer, Kobalt, Nickel, Eisen, Mangan, Vanadium, Molybdän oder Wolfram sowie weitere Übergangsmetallen oder deren Oxide oder metallhaltige Zeolithe als aktive Komponenten enthält.

## Claims

1. A method for the catalytic cleaning of the exhaust gases of a spark-ignition engine operated with mixtures of ammonia and hydrogen as fuel, **characterised in that**
- the fuel of the piston engine consists of admixtures of hydrogen to ammonia, in such a way that a fuel with a proportion of ammonia between 20% und 100% is obtained and utilized,
- the fuel can in addition contain nitrogen, if the hydrogen is obtained by cracking ammonia into its elements,
- for the cleaning of the exhaust gases of the pollutants nitrogen oxides and ammonia, an automotive catalytic exhaust gas converter with platin, palladium, rhodium or other components that contain noble metals is used, wherein the catalytic converter also contains an oxygen-storing component,
- wherein, on average over time, the operation of the combustion engine takes place from the slightly rich range to the stoichiometric range between 0.9 < λ ≤ 1, preferably between 0.98 < λ ≤ 1.

2. The method according to claim 1, wherein the operation of the combustion engine takes place under stoichiometric conditions at λ = 1, wherein, because of the pendulum operation about the stoichiometric point that is common for the λ regulation, the time-average value is taken here for λ.

3. The method according to claim 1, wherein in a first step the operation of the combustion engine takes place, on average over time, in the slightly rich range between 0.9 < λ < 1, preferably between 0.98 < λ < 1.

4. The method according to any one of claims 1-3, with an additional ammonia-cracking catalyst, wherein the catalyst contains iron, nickel, or ruthenium on a carrier as the active component.

5. The method according to claim 4, wherein the ammonia-cracking catalyst is provided downstream of the noble-metal containing catalyst.

6. The method according to claim 4, wherein the ammonia-cracking catalyst is provided upstream of the noble-metal containing catalyst.

7. The method according to claim 3, wherein the ammonia-cracking catalyst with the active components iron, nickel or ruthenium for cracking is admixed into the noble-metal containing catalyst in a way that there is no longer any spatial separation between the two catalysts.

8. The method according to claim 1 and claims 3-7, with additional admixture of a small amount of air in a second step after the automotive catalytic exhaust gas converter for transferring the exhaust gas to λ > 1, and downstream provision of a selective oxidation catalyst in order to remove residues of ammonia, wherein the oxidation catalyst contains copper, cerium, cobalt, nickel, iron, manganese, vanadium, molybdenum, or tungsten as well as other transition metals or their oxides, or zeolites containing metal, as active components.

## Revendications

1. Procédé pour la purification catalytique des gaz d'échappement d'un moteur à allumage commandé opéré avec des mélanges d'ammoniac et hydrogène comme carburant, **caractérisé en ce que**
- le carburant du moteur à piston est constitué des admixtions de l'hydrogène à l'ammoniac, de telle manière qu'on obtient et utilise un carburant avec une proportion d'ammoniac entre 20 % et 100 %,
- le carburant peut en outre contenir de l'azote, lorsque l'hydrogène est obtenu par craquage de l'ammoniac dans ses éléments,
- on utilise, pour la purification des gaz d'échappement des polluants que sont les oxydes d'azote et l'ammoniac, un convertisseur catalytique des gaz d'échappement de voiture, avec du platine, du palladium, du rhodium ou d'autres composants contenant des métaux nobles, le convertisseur catalytique en outre contenant un composant de stockage de l'oxygène ;
- dans lequel l'opération du moteur à combustion s'effectue, en moyenne dans le temps, dans la plage faiblement riche jusqu'à la plage stoechiométrique entre 0,9 < λ ≤ 1, de préférence entre 0,98 < λ ≤ 1.

2. Procédé selon la revendication 1, dans lequel l'opération du moteur à combustion s'effectue dans des conditions stoechiométriques au niveau de λ = 1, en prenant ici la valeur moyenne temporelle pour λ à cause de l'opération oscillante autour du point stoechiométrique qui est habituelle dans la régulation λ.

3. Procédé selon la revendication 1, dans lequel l'opération du moteur à combustion s'effectue, dans une première étape, en moyenne dans le temps, dans la plage faiblement riche entre 0,9 < λ < 1, de préférence entre 0,98 < λ < 1.

4. Procédé selon l'une quelconque des revendications 1-3, avec un catalyseur de craquage de l'ammoniac additionnel, dans lequel le catalyseur contient du fer, du nickel ou du ruthénium sur un support en tant que composant actif.

5. Procédé selon la revendication 4, dans lequel le catalyseur de craquage d'ammoniac est prévu en aval du catalyseur contenant des métaux nobles.

6. Procédé selon la revendication 4, dans lequel le catalyseur de craquage d'ammoniac est prévu en amont du catalyseur contenant des métaux nobles.

7. Procédé selon la revendication 3, dans lequel le catalyseur de craquage d'ammoniac avec les composants actifs fer, nickel ou ruthénium pour le craquage est mélangé dans le catalyseur contenant des métaux nobles, de telle manière qu'il n'y a plus de séparation spatiale des deux catalyseurs.

8. Procédé selon la revendication 1 et les revendications 3-7, avec admixtion additionnelle d'une petite quantité d'air dans une seconde étape après le convertisseur catalytique des gaz d'échappement de voiture, pour le passage du gaz d'échappement à λ > 1, et provision en aval d'un catalyseur sélectif d'oxydation pour éliminer des résidus d'ammoniac, le catalyseur d'oxydation contenant du cuivre, cérium, cobalt, nickel, fer, manganèse, vanadium, molybdène ou tungstène ainsi que des autres métaux de transition ou leurs oxydes, ou des zéolithes contenant de métal en tant que composants actifs.
